# FASCICULE DE BREVET EUROPEEN

(11) **EP 3 870 430 B1**
(45) Date de publication et mention de la délivrance du brevet: **23.02.2022**
(21) Numéro de dépôt: 19842754.4
(22) Date de dépôt: 02.12.2019
(51) Int. Cl.: B29D 30/46, B65H 19/30, B65H 19/22, B29D 30/38, B29D 30/42, B65H 75/24

(54) **INSTALLATION ET PROCEDE AUTOMATIQUES DE TRANCANNAGE DE BANDELETTES A PARTIR D'UNE NAPPE PRESENTEE EN BOBINE**
AUTOMATISCHE VORRICHTUNG UND AUTOMATISCHES VERFAHREN ZUM QUERWICKELN VON STREIFEN VON EINER GEWICKELTEN BAHN
AUTOMATIC FACILITY AND AUTOMATIC METHOD FOR TRANSVERSE WINDING OF STRIPS FROM A COILED WEB

(30) Priorité: 17.01.2019 FR 1900429
(43) Date de publication de la demande: 01.09.2021
(73) Titulaire: Spoolex, 42230 Roche La Moliere (FR)
(72) Inventeur: LASSALLE, Luc, 42100 SAINT-ETIENNE (FR); PAULET, Guillaume, 43240 SAINT JUST MALMONT (FR)
(74) Mandataire: Cabinet Laurent & Charras
(86) Numéro de dépôt international: PCT/FR2019/052892
(87) Numéro de publication internationale: WO 2020/148488

(56) Documents cités:
- FR-A1- 3 062 808
- JP-A- H01 295 836
- US-B1- 6 283 402

## Description

### DOMAINE TECHNIQUE

L'invention se rattache au secteur technique du trancannage de produits souples, tel que des matériaux textiles, ou des matériaux caoutchouteux, par exemple à base de gomme utilisée pour la fabrication d'un pneumatique, sous la forme de bandelettes de largeur de l'ordre de 10 mm, à partir d'une nappe présentée en bobine d'une largeur comprise par exemple entre 1000 mm et 2000 mm.

Par « gomme », on entend une pâte à base de caoutchouc, utilisée dans la fabrication d'un pneumatique. Cette pâte à base de caoutchouc peut intégrer un élément de renfort, tel que du tissu, de la corde, ou du câble, ou tout autre composant ou éléments structurels.

### ART ANTERIEUR

Dans l'état actuel de la technique, et pour réaliser une opération de trancannage autour d'un mandrin de bandelettes de largeur de l'ordre de 10 mm, il est connu d'utiliser une nappe présentée en bobine d'une largeur comprise entre 1000 mm et 2000 mm.

En pratique, la nappe est déroulée et acheminée vers une machine de refendage, communément appelée découpeuse large, pour découper la nappe en une pluralité de bandes de largeur comprise par exemple entre 100 mm et 300 mm.

Les différentes bandes sont ensuite enroulées en galettes autour d'une même barre d'enroulage et de stockage, sous la forme d'une barre expansible. A la différence d'un enroulage d'une nappe qui prend la forme d'une bobine, l'enroulage des bandes prend la forme de galettes, du fait de leur faible largeur.

Les galettes sont ensuite extraites de la barre expansible, et transportées manuellement, une par une, sur une autre barre expansible installée sur le dérouleur d'une deuxième machine de refendage, communément appelée découpeuse étroite, pour découper les bandes en une pluralité de bandelettes de largeur de l'ordre de 10 mm.

Les différentes bandelettes sont ensuite chacune trancannée autour d'un mandrin pour former des bobines.

Ces différentes opérations obligent à fournir plusieurs types de barres, et l'utilisation de mandrins intermédiaires en carton, en plastique, ou en métal, notamment pour le transport des galettes une par une, et obligent également un nombre important de manipulations de barres et de produits, avec les risques que cela comporte, tels que des risques d'accidents d'un opérateur, ou de détérioration des galettes en cas de chute au cours du transport.

Les inconvénients précités sont d'autant plus exacerbés du fait que l'opérateur doit manipuler des galettes de 100 mm à 300 mm d'un poids d'environ 50 kg à 150 kg, et cela environ toutes les 3 à 5 minutes.

Une installation automatique de trancannage de bandelettes de l'état de la technique est notamment divulguée dans le document FR 3 062 808.

### EXPOSE DE L'INVENTION

L'un des buts de l'invention est donc de remédier aux problèmes précités, et de fournir une installation et un procédé automatiques de trancannage de bandelettes à partir d'une nappe présentée en bobine, permettant de supprimer toute manipulation intermédiaire de galettes entre une découpeuse large et une découpeuse étroite, tout en permettant également de s'affranchir de l'utilisation de mandrins intermédiaires, et de la manipulation de barres de déroulage et d'enroulage.

Pour résoudre les problèmes précités, il a été conçu et mis au point une installation automatique de trancannage de bandelettes à partir d'une nappe présentée en bobine selon la revendication 1 et un procédé automatique correspondant de trancannage de bandelettes selon la revendication 10.

D'une manière connue, l'installation comprend successivement :
- un premier module de découpe de la nappe présentée en bobine en une pluralité de bandes ;
- un deuxième module d'enroulage des bandes autour d'une même barre pour former des galettes ;
- un troisième module de découpe d'une bande présentée en galette en une pluralité de bandelettes ;
- un quatrième module de trancannage des bandelettes autour de mandrins pour former des bobines.

Selon l'invention, la barre recevant les galettes comprend un arbre autour duquel sont montés une pluralité de tronçons espacés les uns des autres, et chacun destiné à recevoir une galette. Les tronçons sont entrainables en rotation par l'arbre dans un même sens pour pouvoir enrouler simultanément l'ensemble des bandes en galettes, et sont montés libres en rotation dans un sens opposé pour pouvoir dérouler les galettes une par une.

Selon une autre caractéristique de l'invention, l'installation comprend un système de préhension automatique apte à saisir une barre pleine de galettes depuis le deuxième module d'enroulage, et apte à déposer une barre pleine de galettes sur un chariot déplaçable devant le troisième module pour le déroulage et le découpage une par une des bandes présentées en galettes en une pluralité de bandelettes. Le chariot comprenant, de préférence, des moyens de blocage en rotation des galettes qui ne sont pas en cours de déroulage.

Selon l'invention, la barre est donc utilisée successivement sur une découpeuse large pour l'enroulement des bandes en galettes, et ensuite sur une découpeuse étroite pour le déroulage des galettes, la découpe en bandelettes, et le trancannage.

L'installation selon l'invention permet également de manipuler automatiquement la barre entre la découpeuse large et la découpeuse étroite.

L'invention permet ainsi de n'avoir aucune galette de produit à manipuler entre la découpeuse large et la découpeuse étroite, garantissant ainsi l'intégrité du produit. Ceci permet également de gagner du temps, de supprimer les risques pour les opérateurs, et d'éviter une consommation de mandrins en carton ou en plastique ou en métal.

Avantageusement, le système de préhension automatique est apte à saisir une barre vide depuis le chariot de déroulage, et apte à réapprovisionner le deuxième module d'enroulage avec une barre vide.

De cette manière, après avoir terminé l'opération d'enroulage des bandes et de trancannage des bandelettes, l'installation permet de récupérer la barre vide pour réapprovisionner la découpeuse large en vue de poursuivre l'opération de déroulage et de découpe de la nappe.

De préférence, l'installation comprend une pluralité d'étagères de stockage intermédiaire de barres entre le deuxième module d'enroulage et le chariot de déroulage, et le système de préhension est apte à saisir une barre pleine de galettes ou vide depuis une étagère, et est apte à déposer une barre pleine de galettes ou vide sur une étagère.

De cette manière, pendant les opérations de découpe des bandes en bandelettes, et de trancannage desdites bandelettes, l'installation peut continuer à découper la nappe et enrouler les bandes autour d'une barre. Lorsque la barre est pleine et que la découpeuse étroite est occupée, la barre est saisie automatiquement par le système de préhension et stockée sur une étagère en attente de pouvoir être saisie à nouveau et déposée sur le chariot pour passage sur la découpeuse étroite.

Selon une forme de réalisation particulière, le chariot est motorisé et déplaçable automatiquement entre une position de découpage d'une bande, située devant le troisième module de découpe, et une position de réception/évacuation d'une barre, écartée du troisième module de découpe.

De préférence, les moyens de blocage que comprend le chariot sont des palettes, positionnées au-dessous de chaque tronçon de la barre, chaque palette étant assujettie à des moyens de levage pour venir se plaquer contre la galette correspondante.

De préférence, chaque tronçon de la barre comprend au moins un manchon monté autour d'une roue libre fixée autour de l'arbre.

Selon une forme de réalisation particulière, le système de préhension est déplaçable horizontalement et selon une direction perpendiculaire à la barre, notamment lorsqu'elle est considérée chargée sur le deuxième module.

Dans cette configuration, le chariot est de préférence déplaçable transversalement par rapport à la direction de déplacement du système de préhension, pour adopter la position de réception/évacuation, située sur la direction de déplacement du système de préhension, ou la position de découpage d'une bande, située devant le troisième module de découpe.

De la même manière, les étagères sont de préférence déplaçables transversalement par rapport à la direction de déplacement du système de préhension, pour adopter une position de chargement/déchargement des barres, située sur la direction de déplacement du système de préhension, ou une position de stockage intermédiaire, écartée de la direction de déplacement du système de préhension.

L'invention concerne également un procédé automatique de trancannage de bandelettes à partir d'une nappe présentée en bobine, remarquable en ce qu'il comprend des étapes consistant à :
- dérouler la nappe et la découper en une pluralité de bandes ;
- former des galettes en enroulant les bandes autour d'une même barre comprenant un arbre autour duquel sont montés une pluralité de tronçons espacés les uns des autres, chaque tronçon étant destiné à recevoir une galette, les tronçons étant entrainables en rotation par l'arbre dans un même sens pour pouvoir enrouler simultanément l'ensemble des bandes en galettes, et montés libres en rotation dans un sens opposé pour pouvoir dérouler les galettes une par une ;
- saisir la barre pleine de galettes par l'intermédiaire d'un système de préhension automatique et déposer la barre pleine sur un chariot de déroulage déplaçable devant le troisième module ;
- dérouler et découper une par une les bandes présentées en galettes en une pluralité de bandelettes en déplaçant successivement le chariot pour présenter la galette à dérouler.

### DESCRIPTION SOMMAIRE DES FIGURES

D'autres avantages et caractéristiques de l'invention ressortiront mieux de la description qui va suivre, donnée à titre d'exemple non limitatif, à partir des figures annexées dans lesquelles :
[Fig. 1] est une représentation schématique d'un exemple d'installation selon l'invention, vue de dessus ;
[Fig. 2] est une représentation schématique similaire à celle de la figure 1, illustrant un autre mode de réalisation de l'installation selon l'invention ;
[Fig. 3] est une représentation schématique similaire à celle de la figure 2, illustrant l'installation vue de côté ;
[Fig. 4] illustre une découpeuse large, équipée de deux barres de réception de galettes, selon l'invention ;
[Fig. 5] illustre une découpeuse étroite, devant laquelle est positionné un chariot recevant la barre pleine de galettes pour déroulage et découpage en bandelettes ;
[Fig. 6] illustre une barre de réception des galettes, en coupe longitudinale ;
[Fig. 7] illustre une barre de réception des galettes, reçue sur un chariot de déroulage.

### DESCRIPTION DETAILLEE DE L'INVENTION

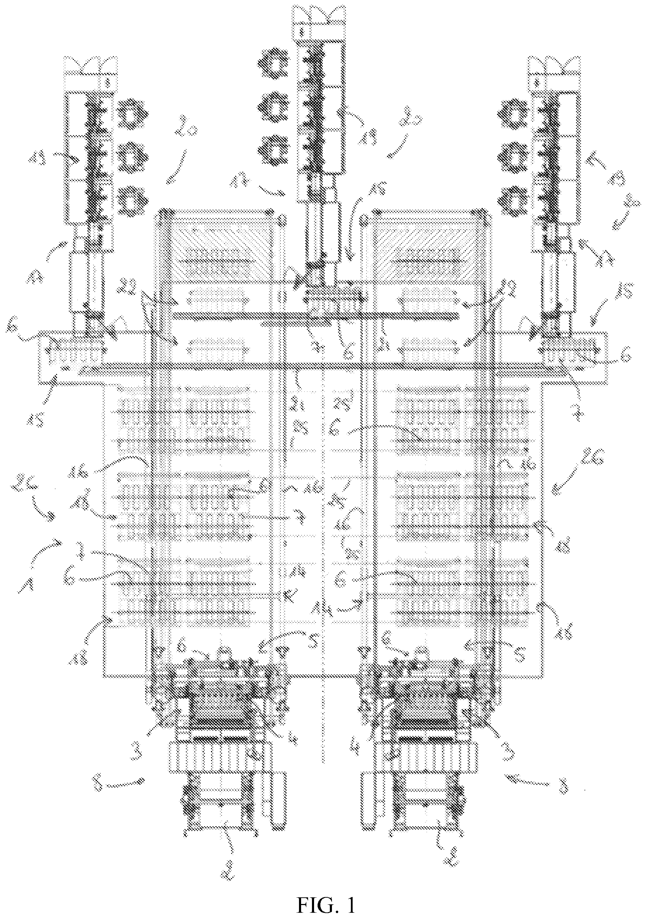

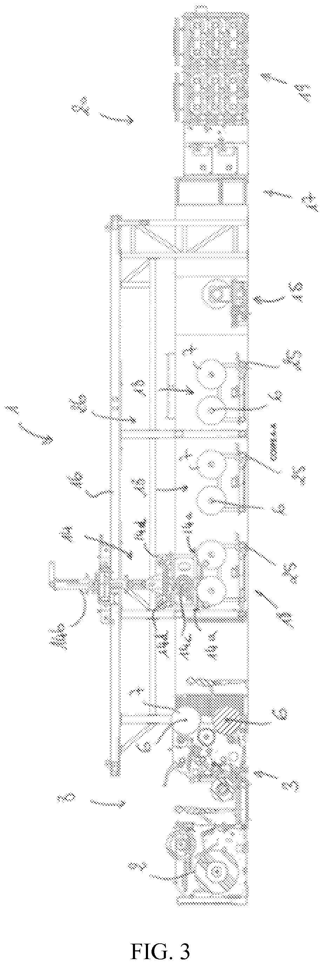

En référence aux figures 1 à 3, l'invention concerne une installation (1) automatique de trancannage de bandelettes à partir d'une nappe (2) présentée en bobine.

A cet effet, en référence aux figures 1 à 4, l'installation (1) comprend un premier module (3) de découpe de la nappe (2) en une pluralité de bandes (4), et un deuxième module (5) d'enroulage des bandes (4) découpées autour d'une même barre (6) pour former des galettes (7). Le premier module (3) et deuxième module (5) forment ensemble une machine de refendage, appelée découpeuse large (8), et bien connue de l'état de la technique. Cette découpeuse large (8) ne sera donc pas décrite en détail.

La découpeuse large (8) comprend, d'une manière connue, des moyens de réception d'une nappe (2) présentée en bobine, par exemple d'une largeur comprise entre 1000 mm et 2000 mm. La découpeuse large (8) comprend des moyens pour dérouler et faire défiler la nappe (2), ainsi que des lames de coupe permettant de couper la nappe (2) dans sa largeur en une pluralité de bandes (4), par exemple de largeur comprise entre 100 mm et 300 mm.

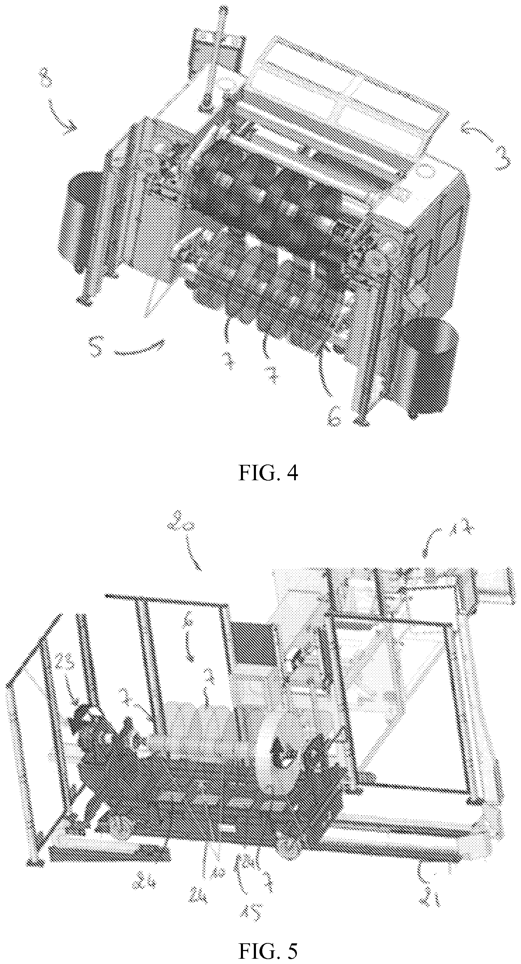

La découpeuse large (8) peut comprendre une seule barre (6) recevant l'ensemble des galettes (7), mais avantageusement et en référence à la figure 4, la découpeuse large (8) comprend deux barres (6) positionnées par exemple l'une au-dessus de l'autre, et chacune destinée à enrouler plusieurs bandes (4) en galettes (7).

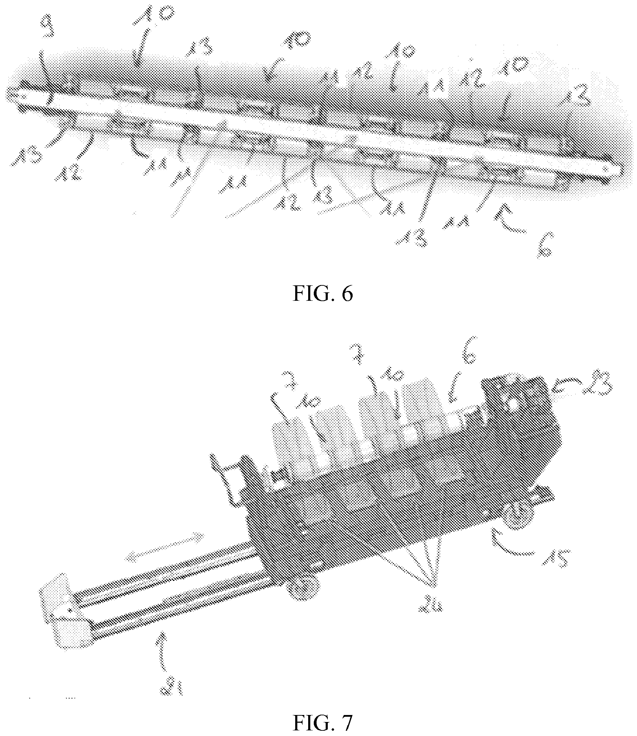

La barre (6) qui reçoit les galettes (7) est avantageuse en ce qu'elle permet l'enroulage simultané d'une pluralité de bandes (4), et le déroulage des galettes (7) une par une. Pour ce faire et en référence à la figure 6, la barre (6) comprend un arbre (9) autour duquel sont montés une pluralité de tronçons (10) espacés les uns des autres, avec chaque tronçon (10) destiné à recevoir une galette (7). Les tronçons (10) présentent la particularité de pouvoir être entraînables en rotation par l'arbre (9) dans un même sens pour pouvoir enrouler simultanément l'ensemble des bandes (4) en galettes (7), notamment lorsque la barre (6) chargée sur le deuxième module (5) d'enroulage. Les tronçons (10) présentent également la particularité d'être montés libres en rotation dans un sens opposé au sens d'enroulage, pour pouvoir dérouler les galettes (7) une par une.

Plus précisément, et selon une forme de réalisation particulière, chaque tronçon (10) est composé d'une roue libre (11) fixée autour de l'arbre (9), et autour de laquelle est emmanché un manchon (12). Sur la forme de réalisation illustrée à la figure 6, deux manchons (12) adjacents sont montés autour d'une roue libre (11) pour former un tronçon (10).

De cette manière, le manchon (12) peut recevoir une galette (7), en enroulant une bande (4) autour dudit manchon (12). Du fait de la présence des roues libres (11), les manchons (12), et par conséquent les galettes (7), sont alors libres en rotation dans un sens, et entraînables en rotation dans un sens opposé, par la rotation de l'arbre (9). Ces roues libres (11) peuvent être réalisées de toute manière connue, et se présentent par exemple sous la forme de roues libres à cliquets ou bien de roues libres à rouleaux.

Pour espacer les différents tronçons (10) des uns des autres, des flasques (13) sont disposés entre les tronçons (10). Ces flasques (13) sont montés libres en rotation autour de roulements à billes ou de roues libres (11) fixés autour de l'arbre (9). De cette manière, la rotation des tronçons (10) est libre, et n'est pas gênée par la présence des flasques (13), ni par la présence des autres tronçons (10) adjacents. Ces flasques (13) permettent un débordement de la bande (4) pendant l'enroulement sur un tronçon, sans risquer de s'enrouler autour du tronçon (10) adjacent.

Afin d'enrouler la pluralité de bandes (4) en galettes (7) autour de la barre (6), l'arbre (9) de la barre (6) est entraîné en rotation de sorte à entraîner simultanément tous les tronçons (10) en rotation, et dans le même sens.

En référence aux figures 1 à 3, et une fois l'opération d'enroulage des galettes (7) terminée, la barre (6) pleine de galettes (7) est saisie par l'intermédiaire d'un système de préhension (14) automatique pour ensuite être déposée, soit sur un chariot (15) de déroulage, notamment apte à supporter l'arbre (9) de la barre (6) par ses extrémités, et déplaçable devant un troisième module (17) de découpe d'une bande (4) présentée en galettes (7) en une pluralité de bandelettes, soit sur une étagère (18) de stockage intermédiaire.

Le système de préhension (14) automatique est donc apte à saisir une barre (6) pleine de galettes (7) depuis le deuxième module (5) d'enroulage, et apte à déposer, soit directement, soit indirectement, une barre (6) pleine de galettes (7) sur le chariot (15). Par ailleurs, le système de préhension (14) automatique est également apte à saisir une barre (6) vide depuis le chariot (15) de déroulage, et est apte à réapprovisionner le deuxième module (5) d'enroulage avec une barre (6) vide, ou à déposer la barre (6) vide sur une étagère (18) de stockage.

Selon une forme de réalisation particulière, le système de préhension (14) est déplaçable horizontalement, et selon une direction perpendiculaire à la barre (6), notamment lorsque celle-ci est considérée chargée sur le deuxième module (5) d'enroulage.

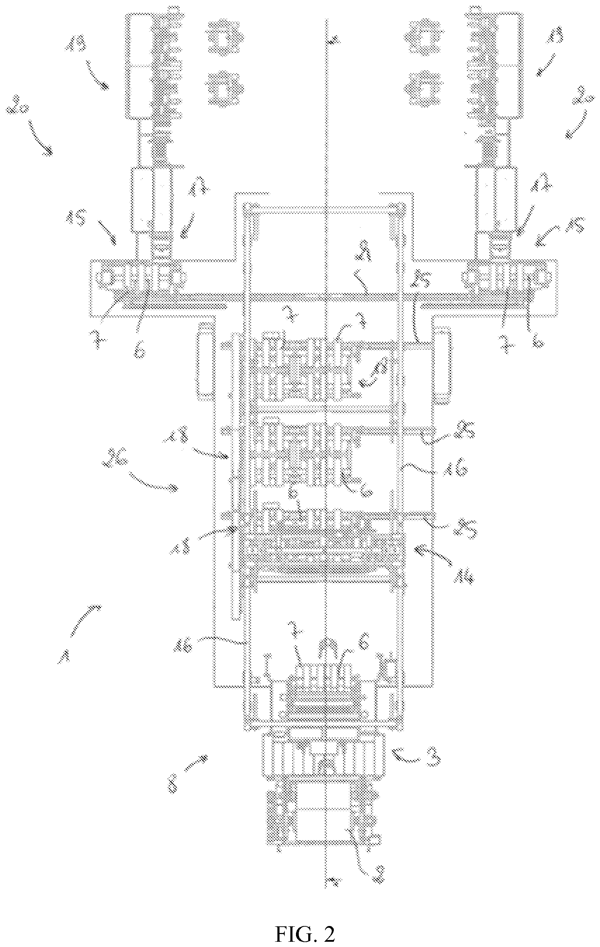

Par exemple et en référence à la figure 2, le système de préhension (14) est déplaçable par l'intermédiaire de deux rails (16) parallèles positionnés de part et d'autre des extrémités de la barre (6), éventuellement en hauteur. Le système de préhension (14) comprend par exemple deux pinces (14a), ou tout autre moyen de saisie, agencées à l'extrémité d'un poteau (14b) déplaçable verticalement pour venir saisir chacune des extrémités de la barre (6), et déplaçables le long des rails (16) en direction du chariot (15) de déroulage.

D'une manière préférée, le système de préhension (14) est apte à saisir simultanément deux barres (6). Pour ce faire, le système de préhension (14) comprend deux jeux de deux pinces (14a), positionné parallèlement l'un par rapport à l'autre. Les jeux de pinces (14a) sont montés pivotant autour d'un axe (14c) pour pouvoir pivoter d'un angle de 90° et saisir simultanément deux barres (6) en sortie de la découpeuse large (8) qui sont positionnée l'une au-dessus de l'autre selon un plan vertical. Une fois les barres (6) saisies, les jeux de pinces (14a) sont de nouveau pivotés d'un angle de 90° pour pouvoir déposer les barres (6) simultanément l'une à côté de l'autre selon un plan horizontal.

D'une manière avantageuse, le système de préhension (14) comprend deux jeux supplémentaires de pinces (14d), positionnés de manière diamétralement opposée par rapport aux premiers jeux de pinces (14a) et autour de l'axe (14c). Ainsi, lorsque deux barres (6) sont saisies en sortie de découpeuse large (8), les jeux de pinces (14a) en position verticale sont pivotés d'un angle de 180° pour mettre en regard les pinces supplémentaires (14d) avec la découpeuse large (8) afin de réapprovisionner ladite découpeuse large (8) avec des barres (6) vides préalablement saisies par les deux jeux supplémentaires de pinces (14d).

Le chariot (15) de déroulage est déplaçable devant le troisième module (17) pour le déroulage et le découpage une par une des bandes (4) présentées en galettes (7) en une pluralité de bandelettes. Le troisième module (17) est suivi d'un quatrième module (19) de trancannage de chaque bandelette découpée autour d'un mandrin pour former des bobines. Le troisième module (17) et le quatrième module (19) forment ensemble une machine de refendage, communément appelée découpeuse étroite (20), et est bien connue de l'état de la technique, de sorte qu'elle ne sera pas décrite plus en détail.

Étant donné que les galettes (7) sont déroulées et découpées une par une, le chariot (15) est déplaçable transversalement pour, lorsqu'une galette est complètement déroulée, mettre en référence la galette suivante pour les opérations de déroulage, découpage, et trancannage suivantes. Par exemple, le chariot (15) est déplaçable sur un rail (21) positionné au sol.

De préférence, le chariot (15) est motorisé et déplaçable automatiquement entre une position de découpage d'une bande (4), située devant le troisième module (17) de découpe, et une position (22) de réception/évacuation d'une barre (6), pleine ou vide, écartée du troisième module (17) de découpe.

Selon une forme de réalisation particulière, le chariot (15) est déplaçable transversalement par rapport à la direction de déplacement du système de préhension (14), pour adopter la position (22) de réception/évacuation, située sur la direction de déplacement du système de préhension (14), ou la position de découpage d'une bande (4), située devant le troisième module (17) de découpe, voir figure 5.

En référence aux figures 5 et 7, le chariot (15) permet supporter la barre (6) en position horizontale, pour le déroulage des galettes (7) une par une. Plus particulièrement, le chariot (15) permet de supporter par exemple l'arbre (9) de la barre (6), au niveau de chacune de ses extrémités.

Lorsque le chariot (15) est positionné devant le troisième module (17) de découpe, l'opération de déroulage d'une galette est réalisée en effectuant une traction sur la bande (4) de la galette (7) dans un sens opposé à celui ayant permis d'enrouler la bande (4). Le chariot (15) comprend, de préférence, des moyens (23) de freinage, par exemple pneumatiques, de la rotation de l'arbre (9) dans le sens du déroulage des galettes (7).

En pratique, les moyens (23) de freinage peuvent être positionnés au niveau d'une extrémité de l'arbre (9), et peuvent être motorisés pour opposer un couple résistant, avec une force contrôlée pour régler la tension des bandes (4).

Avantageusement, et étant donné que les galettes (7) sont déroulées une par une, le chariot (15) comprend des moyens de blocage en rotation des galettes (7) qui ne sont pas en cours de déroulage. Ces moyens de blocage se présentent par exemple sous la forme de palettes (24), positionnées au-dessous de chaque tronçon (10) de la barre (6), chacune assujettie à des moyens de levage (non représentés) pour venir se plaquer contre la galette correspondante.

Les moyens de levage, de tous types appropriés, par exemple pneumatiques, permettent de venir plaquer les palettes (24) contre les galettes (7) correspondantes pour bloquer la rotation des galettes (7) qui ne sont pas en cours de déroulage. Cette fonction est autorisée du fait de la présence des roues libres (11).

En cours de déroulage d'une galette, le tronçon (10) correspondant de la barre (6) permet donc la transmission du couple depuis l'élément moteur ou frein, alors que les autres tronçons (10) sont maintenus fixes autour de de la barre (6), du fait de la présence des roues libres (11) et des palettes (24) de freinage.

L'installation (1) comprend également une pluralité d'étagères (18) de stockage intermédiaire de barres (6), entre le deuxième module (5) d'enroulage et le chariot (15) de déroulage. De ce fait, le système de préhension (14) est apte à saisir une barre (6) pleine de galettes (7) ou bien vide, depuis l'une des étagères (18), et est apte à déposer une barre (6) pleine galettes (7) ou vide, sur une étagère (18) pour son stockage avant réapprovisionnement du premier module (3) ou du troisième module (17).

De la même manière que pour le chariot (15) de déroulage, les étagères (18) sont déplaçables transversalement par rapport à la direction du déplacement du système de préhension (14). Ainsi, le déplacement des étagères (18) leur permet d'adopter une position de chargement/déchargement des barres (6), laquelle position est située sur la direction de déplacement du système de préhension (14), ou une position de stockage intermédiaire écartée de la direction de déplacement du système de préhension (14) et située dans une zone de stockage (26).

Les étagères (18) sont de tout type approprié, et permettent notamment de supporter les barres (6) par leurs extrémités, et sont déplaçables, par exemple, le long de rails (25) disposés transversalement et perpendiculairement aux rails (16) de déplacement du système de préhension (14).

Ainsi, l'installation (1) permet de mettre en œuvre un procédé automatique de trancannage de bandelettes à partir d'une nappe (2) présentée en bobines, comprenant des étapes consistant à :
- dérouler la nappe (2) et la découper en une pluralité de bandelettes, notamment par l'intermédiaire des premiers et deuxième modules (3, 5), bien connus de l'état de la technique ;
- former des galettes (7) en enroulant les bandes (4) autour d'une même barre (6) permettant d'enrouler simultanément l'ensemble des bandes (4) en galettes (7), et de les dérouler une par une ;
- saisir la barre (6) pleine de galettes (7) par l'intermédiaire du système de préhension (14) automatique, lequel se déplace ensuite longitudinalement selon une direction horizontale et perpendiculaire à la barre (6) pour déposer ladite barre (6) pleine de galettes (7) sur le chariot (15) de déroulage déplacé transversalement sur son chemin.

Le chariot (15) se déplace ensuite transversalement pour aller se positionner devant le troisième module (17) de découpe, pour le déroulage et le découpage une par une des bandes (4) présentées en galettes (7) en une pluralité de bandelettes. Lorsque le déroulage d'une galette est terminé, le chariot (15) se déplace transversalement pour mettre en référence la galette (7) suivante en vue de son déroulage et découpage, et ainsi de suite.

Dans l'intervalle, le système de préhension (14) est retourné en arrière pour venir saisir une autre barre (6) pleine de galettes (7). Il est ensuite déplacé pour venir poser cette barre (6) pleine de galettes (7) sur une étagère (18) de stockage déplacée transversalement sur son chemin, tant que le chariot (15) de déroulage et le troisième module (17) sont occupés. L'étagère (18) est ensuite écartée transversalement pour reprendre sa position de stockage intermédiaire.

Le système de préhension (14) dépose autant de barres (6) pleines que possible, pendant l'opération de déroulage et découpage des galettes (7). Une fois l'opération terminée de déroulage et découpage des galettes (7), le chariot (15) se déplace transversalement pour venir adopter la position (22) de réception/évacuation située sur le chemin de déplacement du système de préhension (14), pour que ledit système de préhension (14) vienne saisir la barre (6) vide et la déposer sur une étagère (18) de stockage intermédiaire, déplacée sur son chemin de déplacement.

Le procédé se poursuit automatiquement jusqu'à ce que la bobine de nappe (2) soit vide.

Une fois les bandelettes trancannées, les bobines de bandelettes sont évacuées du quatrième module (19) de toute manière appropriée, par exemple manuellement ou automatiquement.

L'installation (1) est évolutive et n'est pas limitée en nombre de machine. Par exemple, l'installation (1) peut comprendre une découpeuse large (8) avec une découpeuse étroite (20), ou bien tel qu'illustré à la figure 2 une découpeuse large (8) avec deux découpeuses étroites (20) et une zone de stockage (26), ou bien deux découpeuses larges (8) avec deux découpeuses étroites (20) et deux zones de stockage (26), ou bien tel qu'illustré à la figure 1 deux découpeuses larges (8) avec trois découpeuses étroites (20) et deux zones de stockage (26), ou bien deux découpeuses larges (8) avec quatre découpeuses étroites (20) et deux zones de stockage (26). Les zones de stockage (26) sont dimensionnées en fonction des besoins et de la place disponible.

Il ressort de ce qui précède que l'invention fournit une installation (1) et un procédé automatique de trancannage de bandelettes, à partir d'une nappe (2) présentée en bobine, permettant d'éviter de transférer les galettes (7) d'une barre (6) à une autre, et permet donc un gain de temps entre les différentes machines de découpage, et donc un gain de productivité. L'invention permet également de s'affranchir de toutes pièces intermédiaires, comme par exemple des mandarins en carton utilisés pour le transport des galettes (7).

L'invention permet donc de réaliser des opérations successives de découpe large de bandes (4) et de découpe étroite de bandelettes, de manière automatique, sans changer de barre (6) entre ces deux opérations.

## Revendications

1. Installation (1) automatique de trancannage de bandelettes à partir d'une nappe (2) présentée en bobine, comprenant successivement :
- un premier module (3) de découpe de la nappe (2) présentée en bobine en une pluralité de bandes (4) ;
- un deuxième module (5) d'enroulage des bandes (4) autour d'une même barre (6) pour former des galettes (7) ;
- un troisième module (17) de découpe d'une bande (4) présentée en galette en une pluralité de bandelettes ;
- un quatrième module (19) de trancannage des bandelettes autour de mandrins pour former des bobines ;
***caractérisée* en ce que** la barre (6) recevant les galettes (7) comprend un arbre (9) autour duquel sont montés une pluralité de tronçons (10) espacés les uns des autres, chaque tronçon (10) étant destiné à recevoir une galette (7), les tronçons (10) étant entrainables en rotation par l'arbre (9) dans un même sens pour pouvoir enrouler simultanément l'ensemble des bandes (4) en galettes (7), et montés libres en rotation dans un sens opposé pour pouvoir dérouler les galettes (7) une par une, ***et en ce que*** l'installation (1) comprend un système de préhension (14) automatique apte à saisir une barre (6) pleine de galettes (7) depuis le deuxième module (5) d'enroulage, et apte à déposer une barre (6) pleine de galettes (7) sur un chariot (15) déplaçable devant le troisième module (17) pour le déroulage et le découpage une par une des bandes (4) présentées en galettes (7) en une pluralité de bandelettes.

2. Installation (1) selon la revendication 1, ***caractérisée* en ce que** le système de préhension (14) automatique est apte à saisir une barre (6) vide depuis le chariot (15) de déroulage, et apte à réapprovisionner le deuxième module (5) d'enroulage avec une barre (6) vide.

3. Installation (1) selon la revendication 2, ***caractérisée* en ce qu'**elle comprend une pluralité d'étagères (18) de stockage intermédiaire de barres (6) entre le deuxième module (5) d'enroulage et le chariot (15) de déroulage ***et en ce que*** le système de préhension (14) est apte à saisir une barre (6) pleine de galettes (7) ou vide depuis une étagère (18), et apte à déposer une barre (6) pleine de galettes (7) ou vide sur une étagère (18).

4. Installation (1) selon la revendication 3, ***caractérisée* en ce que** le chariot (15) est motorisé et déplaçable automatiquement entre une position de découpage d'une bande (4), située devant le troisième module (17) de découpe, et une position (22) de réception/évacuation d'une barre (6), écartée du troisième module (17) de découpe.

5. Installation (1) selon la revendication 1, ***caractérisée* en ce que** le chariot (15) comprend des moyens de blocage en rotation des galettes (7) qui ne sont pas en cours de déroulage sous la forme de palettes (24), positionnées au-dessous de chaque tronçon (10) de la barre (6), chaque palette étant assujettie à des moyens de levage pour venir se plaquer contre la galette correspondante.

6. Installation (1) selon la revendication 1, ***caractérisée* en ce que** chaque tronçon (10) de la barre (6) comprend au moins un manchon (12) monté autour d'une roue libre (11) fixée autour de l'arbre (9).

7. Installation (1) selon la revendication 4, ***caractérisée* en ce que** le système de préhension (14) est déplaçable horizontalement et selon une direction perpendiculaire à la barre (6).

8. Installation (1) selon la revendication 7, ***caractérisée* en ce que** le chariot (15) est déplaçable transversalement par rapport à la direction de déplacement du système de préhension (14), pour adopter la position (22) de réception/évacuation, située sur la direction de déplacement du système de préhension (14), ou la position de découpage d'une bande (4), située devant le troisième module (17) de découpe.

9. Installation (1) selon la revendication 7, ***caractérisée* en ce que** les étagères (18) sont déplaçables transversalement par rapport à la direction de déplacement du système de préhension (14), pour adopter une position de chargement/déchargement des barres (6), située sur la direction de déplacement du système de préhension (14), ou une position de stockage intermédiaire, écartée de la direction de déplacement du système de préhension (14).

10. Procédé automatique de trancannage de bandelettes à partir d'une nappe (2) présentée en bobine, ***caractérisé* en ce qu'**il comprend des étapes consistant à :
- dérouler la nappe (2) et la découper en une pluralité de bandes (4) ;
- former des galettes (7) en enroulant les bandes (4) autour d'une même barre (6) comprenant un arbre (9) autour duquel sont montés une pluralité de tronçons (10) espacés les uns des autres, chaque tronçon (10) étant destiné à recevoir une galette (7), les tronçons (10) étant entrainables en rotation par l'arbre (9) dans un même sens pour pouvoir enrouler simultanément l'ensemble des bandes (4) en galettes (7), et montés libres en rotation dans un sens opposé pour pouvoir dérouler les galettes (7) une par une ;
- saisir la barre (6) pleine de galettes (7) par l'intermédiaire d'un système de préhension (14) automatique et déposer la barre (6) pleine sur un chariot (15) de déroulage déplaçable devant le troisième module (17) ;
- dérouler et découper une par une les bandes (4) présentées en galettes (7) en une pluralité de bandelettes en déplaçant successivement le chariot (15) pour présenter la galette à dérouler.

## Patentansprüche

1. Automatische Anlage (1) zum Umspulen von Streifen, ausgehend von einer Matte (2), die auf einer Spule aufgerollt ist, die aufeinanderfolgend enthält:
- ein erstes Modul (3) zum Schneiden der auf einer Spule aufgerollten Matte (2) in eine Vielzahl von Bandstreifen (4);
- ein zweites Modul (5) zum Aufrollen der Bandstreifen (4) um dieselbe Stange (6) um Platten (7) zu bilden;
- ein drittes Modul (17) zum Schneiden eines Bandstreifens (4) in Plattenform in eine Vielzahl von Streifen;
- ein viertes Modul (19) zum Umspulen der Streifen um Dorne herum, um Spulen zu bilden;
***dadurch gekennzeichnet, dass*** die Stange (6) zur Aufnahme der Platten (7) eine Welle (9) enthält, um die eine Vielzahl von Teilstücken (10) in einem bestimmten Abstand voneinander montiert ist, jedes Teilstück(10) ist zur Aufnahme einer Platte (7) bestimmt, die Teilstücke(10) können durch die Welle (9) in dieselbe Richtung in Drehung versetzt werden, um simultan alle Bandstreifen (4) zu Platten (7) aufzurollen, und sind in die Gegenrichtung frei drehbar, um die Platten (7) nacheinander abwickeln zu können, ***und dadurch, dass*** die Anlage (1) ein automatisches Greifsystem (14) enthält, das in der Lage ist eine Stange (6) voll mit Platten (7) aus dem zweiten Aufrollmodul (5) zu ergreifen, und in der Lage ist eine Stange (6) voll mit Platten (7) auf einem Schlitten (15) abzulegen, der vor das dritte Modul (17) geschoben werden kann, zum Abrollen und Schneiden der einzelnen Bandstreifen (4), die als Platten (7) vorliegen, in eine Vielzahl von Streifen.

2. Anlage (1) nach Anspruch 1, ***dadurch gekennzeichnet, dass*** das automatische Greifsystem (14) in der Lage ist, eine leere Stange (6) vom Abrollschlitten (15) zu nehmen und dass es in der Lage ist, das zweite Aufrollmodul (5) wieder mit einer leeren Stange (6) auszurüsten.

3. Anlage (1) nach Anspruch 2, ***dadurch gekennzeichnet, dass*** sie mehrere Fächer (18) zur Zwischenlagerung von Stangen (6) zwischen dem zweiten Aufrollmodul (5) und dem Abrollschlitten (15) enthält ***und dadurch, dass*** das Greifsystem (14) in der Lage ist, eine Stange (6) voll mit Platten (7) oder leer, aus einem Fach (18) zu nehmen und in der Lage ist eine Stange (6) voll mit Platten (7) oder leer, in ein Fach (18) zu legen.

4. Anlage (1) nach Anspruch 3, ***dadurch gekennzeichnet, dass*** der Schlitten (15) einen Motorantrieb hat und automatisch zwischen der Position des Schneidens eines Bandstreifens (4), die sich vor dem dritten Schneidmodul (17) befindet und einer Position (22) des Empfangs/ der Wegnahme einer Stange (6), im Abstand zum dritten Schneidmodul (17) verschoben werden kann.

5. Anlage (1) nach Anspruch 1, ***dadurch gekennzeichnet, dass*** der Schlitten (15) Vorrichtungen zum Blockieren der Drehung der Platten (7) enthält, die nicht gerade abgerollt werden, in Form von Wippen (24), die unter jedem Teilstück (10) der Stange (6) angeordnet sind, jede Wippe hängt dabei von Hubvorrichtungen ab, um sich gegen die entsprechende Platte zu pressen.

6. Anlage (1) nach Anspruch 1, ***dadurch gekennzeichnet, dass*** jedes Teilstück (10) der Stange (6) mindestens eine Hülse (12) enthält, die um ein freies Rad (11) montiert ist, das um die Welle (9) befestigt ist.

7. Anlage (1) nach Anspruch 4, ***dadurch gekennzeichnet, dass*** das Greifsystem (14) horizontal und in einer Richtung senkrecht zur Stange (6) verschiebbar ist.

8. Anlage (1) nach Anspruch 7, ***dadurch gekennzeichnet, dass*** der Schlitten (15) quer zur Bewegungsrichtung des Greifsystem (14) verschoben werden kann, um die Empfangs-/ Wegnahmeposition (22) einzunehmen, die sich in Verschiebrichtung des Greifsystems (14) befindet oder die Schneidposition eines Bandstreifens (4), die sich vor dem dritten Schneidmodul (17) befindet.

9. Anlage (1) nach Anspruch 7, ***dadurch gekennzeichnet, dass*** die Fächer (18) quer verschiebbar sind, bezogen auf die Verschieberichtung des Greifsystems (14), um eine Be-/ Enladeposition der Stangen (6), einzunehmen, die sich in Verschiebrichtung des Greifsystems (14) befindet, oder eine Zwischenlagerungsposition, im Abstand zur Verschiebrichtung des Greifsystems (14).

10. Automatisches Verfahren zum Umspulen von Streifen, ausgehend von einer auf eine Spule aufgerollten Matte (2), ***dadurch gekennzeichnet, dass*** es die folgenden Schritte enthält, und zwar:
- Abrollen der Matte (2) und Schneiden in eine Vielzahl von Bandstreifen (4);
- Bilden von Platten (7) durch Aufwickeln der Bandstreifen (4) um dieselbe Stange (6) herum, die eine Welle (9) enthält, um die mehrere Teilstücke (10) im Abstand voneinander montiert sind, jedes Teilstück (10) ist bestimmt zur Aufnahme einer Platte (7), die Teilstücke (10) können von der Welle (9) in dieselbe Richtung in Drehung angetrieben werden, um simultan alle Bandstreifen (4) zu Platten (7) aufzurollen, und sind in die Gegenrichtung frei drehbar montiert, um die Platten (7) nacheinander abwickeln zu können;
- Ergreifen der Stange (6), die voll mit Platten (7) ist, über ein automatisches Greifsystem (14) und Absetzen der vollen Stange (6) auf einem Abrollschlitten (15), der vor das dritte Modul (17) geschoben werden kann;
- Abrollen und Schneiden der einzelnen Bandstreifen (4), die in der Form von Platten (7) vorliegen, in viele Streifen, indem der Schlitten (15) nach und nach verschoben wird um die abzuwickelnde Platte in Position zu bringen.

## Claims

1. Automatic installation (1) for transversely winding small strips from a coiled web (2), successively comprising:
a first module (3) for cutting the coiled web (2) into a plurality of strips (4);
a second module (5) for winding the strips (4) around one same bar (6) to form wafers (7);
a third module (17) for cutting a wafered strip (4) into a plurality of small strips;
a fourth module (19) for transversely winding the strips around mandrels to form coils;
**characterised in that** the bar (6) which receives the wafers (7) comprises a shaft (9) around which a plurality of sections (10) spaced apart from each other are mounted, each section (10) being intended to receive a wafer (7), the sections (10) being rotatable by the shaft (9) in one same direction so as to be able to simultaneously wind all of the strips (4) into wafers (7), and mounted so as to be free to rotate in an opposite direction in order to be able to unwind the wafers (7) one by one, and **in that** the installation (1) comprises an automatic gripping system (14) which is capable of gripping a bar (6) full of wafers (7) from the second winding module (5), and capable of depositing a bar (6) full of wafers (7) on a moveable carriage (15) in front of the third module (17) for unwinding and cutting the wafered (7) strips (4) one by one into a plurality of small strips.

2. Installation (1) according to claim 1, **characterised in that** the automatic gripping system (14) is capable of gripping an empty bar (6) from the unwinding carriage (15), and capable of restocking the second winding module (5) with an empty bar (6).

3. Installation (1) according to claim 2, **characterised in that** it comprises a plurality of shelves (18) for the intermediate storage of bars (6) between the second winding module (5) and the unwinding carriage (15) and **in that** the gripping system (14) is capable of gripping a bar (6) full of wafers (7) or empty from a shelf (18), and capable of depositing a bar (6) full of wafers (7) or empty on a shelf (18).

4. Installation (1) according to claim 3, **characterised in that** the carriage (15) is motorised and automatically movable between a position for cutting a strip (4), located in front of the third cutting module (17), and a position (22) for receiving/removing a bar (6), separated from the third cutting module (17).

5. Installation (1) according to claim 1, **characterised in that** the carriage (15) comprises means for rotationally blocking the wafers (7) which are not being unwound in the form of pallets (24), positioned below each section (10) of the bar (6), each pallet being secured to lifting means in order to come to bear against the corresponding wafer.

6. Installation (1) according to claim 1, **characterised in that** each section (10) of the bar (6) comprises at least one sleeve (12) mounted around a freewheel (11) fixed around the shaft (9).

7. Installation (1) according to claim 4, **characterised in that** the gripping system (14) is movable horizontally and in a direction perpendicular to the bar (6).

8. Installation (1) according to claim 7, **characterised in that** the carriage (15) is movable transversely with respect to the direction of movement of the gripping system (14), in order to adopt the reception/removal position (22), located in the direction of movement of the gripping system (14), or the cutting position of a strip (4), located in front of the third cutting module (17).

9. Installation (1) according to claim 7, **characterised in that** the shelves (18) are movable transversely with respect to the direction of movement of the gripping device (14), to adopt a loading/unloading position for the bars (6), located in the direction of movement of the gripping device (14), or an intermediate storage position, separate from the direction of movement of the gripping device (14).

10. Automatic method for transversely winding small strips from a coiled web (2), **characterised in that** it comprises steps consisting of:
- unwinding the coiled web (2) and cutting it into a plurality of strips (4);
- forming wafers (7) by winding the strips (4) around one same bar (6) comprising a shaft (9) about which a plurality of sections (10) spaced apart from each other, each section (10) being intended to receive a wafer (7), the sections (10) being rotatable by the shaft (9) in one same direction so as to be able to simultaneously wind all of the strips (4) into wafers (7), and mounted free to rotate in an opposite direction in order to be able to unwind the wafers (7) one by one;
- gripping the bar (6) full of wafers (7) by way of an automatic gripping system (14) and depositing the full bar (6) on a movable unwinding carriage (15) in front of the third module (17);
- unwinding and cutting the wafered (7) strips (4) one by one into a plurality of small strips by successively moving the carriage (15) to present the wafer to be unwound.
